# EUROPÄISCHE PATENTSCHRIFT

(11) **EP 1 587 702 B1**
(45) Veröffentlichungstag und Bekanntmachung des Hinweises auf die Patenterteilung: **19.09.2007**
(21) Anmeldenummer: 03769213.4
(22) Anmeldetag: 25.09.2003
(51) Int. Cl.: B60K 6/04, B60K 11/02, F01P 3/20

(54) **KRAFTFAHRZEUG MIT EINER BRENNKRAFTMASCHINE UND EINER HILFSENERGIEVERSORGUNGSEINRICHTUNG**
MOTOR VEHICLE COMPRISING AN INTERNAL COMBUSTION ENGINE AND AN AUXILIARY POWER UNIT
VEHICULE AUTOMOBILE EQUIPE D'UN MOTEUR A COMBUSTION INTERNE ET D'UN DISPOSITIF D'ALIMENTATION EN ENERGIE AUXILIAIRE

(30) Priorität: 17.01.2003 DE 10301609
(43) Veröffentlichungstag der Anmeldung: 26.10.2005
(73) Patentinhaber: ROBERT BOSCH GMBH, 70442 Stuttgart (DE)
(72) Erfinder: NEUBAUER, Achim, 76547 Sinzheim-Vormberg (DE); HEID, Thomas, 76547 Sinzheim (DE)
(86) Internationale Anmeldenummer: PCT/DE2003/003204
(87) Internationale Veröffentlichungsnummer: WO 2004/069572

(56) Entgegenhaltungen:
- DE-A- 10 142 923

## Beschreibung

Die Erfindung geht von einem Kraftfahrzeug mit einer Brennkraftmaschine und einer Hilfsenergieversorgungseinrichtung nach dem Oberbegriff des Anspruchs 1 aus.

### Stand der Technik

In einigen Betriebszuständen des Kraftfahrzeugs, beispielsweise vor oder beim Kaltstart, beim Kurzstreckenverkehr oder bei langen Talfahrten, ist ein Wärmeeintrag ins Kühlwasser durch die Brennkraftmaschine selbst nicht gegeben oder nicht ausreichend, insbesondere wenn der Wirkungsgrad der Brennkraftmaschine sehr gut ist und folglich geringe Wärmeverluste entstehen. Demzufolge erreicht die Brennkraftmaschine ihre optimale Temperatur in der kurzen Zeit nicht oder erst sehr spät, was zu einem erhöhten Kraftstoff verbrauch und zu erhöhten Abgasemissionen führt.

Zudem werden bei niedrigen Außentemperaturen erhebliche Wärmemengen benötigt, um die Fahrzeugscheiben zu enteisen oder den Fahrzeuginnenraum zu beheizen und so eine ausreichende Fahrsicherheit und einen guten Fahrkomfort sicherzustellen. Derzeit wird diese Problematik vorwiegend mit chemischen oder elektrischen Zuheizem gelöst. Chemische Zuheizer, beispielsweise Brenner, bieten zwar durch die Möglichkeit, auch im Stillstand der Brennkraftmaschine zu heizen, einen hohen Komfort, sind aber relativ teuer. Elektrische Zuheizer nach dem Prinzip einer Widerstandsheizung sind in der Leistung eingeschränkt, weil durch den Generator und die Batterie nicht beliebig viel Strom zur Verfügung gestellt werden kann.

Aus der EP 1 203 697 A2 ist ein Kraftfahrzeug mit einer Brennkraftmaschine und einer Hilfsenergieversorgungseinrichtung, auch APU (Auxiliary Power Unit) genannt, für elektrische Verbraucher an Bord des Kraftfahrzeugs bekannt, die ein Brennstoffzellensystem und eine damit gekoppelte Batterie umfasst. Durch diese Einrichtung wird die elektrische Leistung des Kraftfahrzeugs erhöht und die Möglichkeit geschaffen, eine größere Anzahl elektrischer Verbraucher unabhängig vom Betrieb der Brennkraftmaschine zu betreiben. Die Brennkraftmaschine und das Brennstoffzellensystem sind an einen gemeinsamen Kühl- und Heizkreislauf angeschlossen, in dem ein Kühler gleichzeitig die Brennkraftmaschine und das Brennstoffzellensystem kühlt. Das wird begünstigt durch unterschiedliche Spitzenkühlleistungen, die für die Brennkraftmaschine beim Fahrbetrieb und für das Brennstoffzellensystem beim Fahrzeugstillstand erforderlich sind, beispielsweise in der Startphase oder beim Betrieb einer Standheizung.

Sinnvollerweise werden dabei entstehende Energie- und/oder Stoffströme miteinander gekoppelt, indem z.B. das Abgas der Brennkraftmaschine durch ein System geleitet wird, das einen Wärmetauscher und/oder einen Abgaskatalysator umfasst. Dieses System ist mit dem Brennstoffzellensystem thermisch gekoppelt. Es ist somit möglich mittels der Abgaswärme der Brennkraftmaschine das Brennstoffzellensystem vorzuheizen. Während des Betriebs der Brennkraftmaschine wird das Brennstoffzellensystem auf Betriebstemperatur gehalten und steht so bei einem erhöhten Energiebedarf in kurzer Zeit zur Verfügung. Andererseits kann mit der Abwärme des Brennstoffzellensystems der Abgaskatalysator vorgeheizt werden, bevor die Brennkraftmaschine gestartet wird, so dass deren Schadstoffemission in der Startphase minimiert ist. Überdies ist das Brennstoffzellensystem thermisch mit einer Klimaanlage und/oder einer Standheizung verbunden, so dass deren Abwärme im Bedarfsfall zum Beheizen des Fahrgastinnenraums genutzt werden kann.

Aus der DE 101 42 923 A1 ist weiterhin eine Hybridantriebsvorrichtung für Fahrzeuge bekannt, die wenigstens eine Brennstoffzelle, einen Verbrennungsmotor, einen Generator und/oder einen Elektromotor und eine gemeinsame Kühleinrichtung für die Brennstoffzelle und den Verbrennungsmotor umfasst. Der Verbrennungsmotor, die Brennstoffzelle und die Kühleinrichtung sind miteinander durch Wärmeleitungsmittel wärmeleitend verbunden. Darüber hinaus sind Steuermittel vorgesehen, über die eine Steuerung eines Wärmestromes von Wärme des Verbrennungsmotors zu der Kühleinrichtung und/oder der Brennstoffzelle, von Wärme der Brennstoffzelle zu der Kühleinrichtung und/oder dem Verbrennungsmotor, und/oder von Wärme der Kühleinrichtung zu dem Verbrennungsmotor und/oder der Brennstoffzelle erfolgt.

### Vorteile der Erfindung

Nach der Erfindung weist ein Kühl- und Heizkreislauf einen ersten und einen zweiten Teilkreislauf auf, von denen der erste der Brennkraftmaschine und der zweite der Brennstoffzelle zugeordnet ist. Die beiden Teilkreisläufe sind miteinander verbunden, und zwar durch eine Vorlaufleitung mit einem Vorlaufventil und durch eine Rücklaufleitung mit einem Rücklaufventil. Im zweiten Teilkreislauf sind neben der Brennstoffzelle ein Motorölwärmetauscher und/oder ein Getriebeölwärmetauscher angeordnet, wobei mittels eines regelbaren Ventils eine weitere Leitung des zweiten Teilkreislaufs zum Motorölwärmetauscher für das Motoröl der Brennkraftmaschine und zum Getriebeölwärmetauscher geöffnet wird, so dass auch diese Medien über das Kühlmittel dieses Teilkreislaufs gezielt erwärmt werden. Dabei orientiert sich die Regelung der Wärmeströme in jedem Fall nach einem vorrangigen Bedarf und kann sowohl durch ein Klimasteuergerät oder durch eine Zeitvorgabe einer Motorsteuerung erfolgen. Es ist bekannt, dass das frühzeitige Erwärmen des Motor- bzw. Getriebeöls den Kraftstoffverbrauch reduziert. Neben der Kraftstoffeinsparung verkürzt das frühzeitige Erwärmen des Motor- bzw. Getriebeöls die Startzeit der Brennkraftmaschine und erhöht deren Lebensdauer, da in der Startphase geringere Temperaturschwankungen auftreten.

Vor dem Start der Brennkraftmaschine bei niedrigen Außentemperaturen übernimmt der zweite Teilkreislauf das Kühlen der Brennstoffzelle. Aufgrund einer Vielzahl zu versorgender elektrischer Verbraucher im Standbybetrieb des Kraftfahrzeugs ist die Brennstoffzelle gerade in diesem Betriebszustand einer Spitzenbelastung ausgesetzt, so dass relativ viel Abwärme im Betrieb der Brennstoffzelle entsteht. Diese Abwärme wird über das Kühlmittel des zweiten Teilkreislaufs auf kurzem Weg zu einem Aggregat mit Wärmebedarf transportiert, beispielsweise dem Heizungswärmetauscher der Klimaeinrichtung. Durch diese Anordnung ist vorteilhafterweise sehr schnell und effektiv Energie zum Enteisen der Fahrzeugscheiben sowie zum Klimatisieren des Fahrzeuginnenraums verfügbar. Dabei ist es vorteilhaft, dass der Motorölwärmetauscher und/oder der Getriebeölwäremtauscher mit dem Kühlmittel des zweiten Teilkreislaufs gezielt erwärmt werden, sobald eine gewünschte Temperatur des Fahrzeuginnenraums erreicht ist oder wenn die Brennkraftmaschine gestartet werden soll.

Um einen maximalen Energiebedarf abdecken zu können und das Warmlaufverhalten der Brennstoffzelle zu verbessern, kann außerdem ein Zuheizer zweckmäßigerweise in dem zweiten Teilkreislauf angeordnet werden, der im Bedarfsfall zusätzlich Wärme an das Kühlmittel abgibt. Durch die zwei Teilkreisläufe kann ferner in vorteilhafter Weise das unterschiedliche, nämlich niedrigere Temperaturniveau der Brennstoffzelle gegenüber der Brennkraftmaschine berücksichtigt werden, wodurch Schäden an der Brennstoffzelle durch Überhitzen vermieden werden.

Der Motorölwärmetauscher und der Getriebeölwärmetauscher sind parallel geschaltet und in den zweiten Teilkreislauf integriert, wobei die Vorlaufleitung und Rücklaufleitung, die den ersten Teilkreislauf mit dem zweiten Teilkreislauf verbinden, vor bzw. hinter den Ölkühlern an den zweiten Teilkreislauf angeschlossen sind. Der Zu- und Abfluss des Kühlmittels in diesen Kühlzweig wird ebenfalls nach entsprechenden Vorgaben der Klima-und/oder Brennkraftmaschinensteuerung bedarfsgerecht durch Regelventile eingestellt. So werden der Motorölwärmetauscher und der Getriebeölwärmetauscher im Falle eines erhöhten Kühlleistungsbedarfs, beispielsweise im Fahrbetrieb, durch Öffnen der Ventile in der Vor- und Rücklaufleitung mit Kühlmittel des Teilkreislaufs der Brennkraftmaschine versorgt, während sie vor und beim Start der Brennkraftmaschine zum Vorwärmen primär vom Kühlmittel der Brennstoffzelle und/oder des Zuheizers durchströmt werden. Auch hierbei wird der Wärmeeintrag ins Kühlmittel entweder zu Bedarfsstellen transportiert oder über einen in diesem Teilkreislauf angeordneten Kühler an die Umgebung abgegeben.

Je eine elektrisch angetriebene Pumpe fördert das Schmieröl der Brennkraftmaschine und das Getriebeöl zum Motorölwärmetauscher bzw. zum Getriebeölwärmetauscher. Zudem ist eine elektrisch angetriebene Zusatzpumpe zum Fördern des Kühlmittels im zweiten Teilkreislauf angeordnet. Da diese Pumpen im Standbybetrieb unabhängig von der Brennkraftmaschine über das Bordnetz des Kraftfahrzeugs betrieben werden können, ermöglicht deren Einsatz vorteilhafterweise vor dem Start das Vorwärmen sowohl des Motor- und Getriebeöls als auch der Brennkraftmaschine und des Getriebes selbst. Durch die geringere Viskosität des erwärmten Öls wird der Start der Brennkraftmaschine insbesondere bei tiefen Umgebungstemperaturen verbessert, selbst wenn die Temperatur der Brennkraftmaschine nur unwesentlich angehoben wurde. Um gleichzeitig den Fahrzeuginnenraum beheizen zu können, wird auch der Kühlmitteldurchfluss des Heizungswärmetauschers durch ein elektrisch ansteuerbares Heizungsventil geregelt.

Beim Einsatz von deionisiertem Wasser, das wegen seiner Eigenschaft der Nichtleitfähigkeit derzeit bevorzugt als Kühlmittel bei Brennstoffzellen verwendet wird, ist das Kühlsystem der Brennstoffzelle im zweiten Teilkreislauf als geschlossenes System ausgebildet.

Es weist in dieser Ausführung neben der Brennstoffzelle und einer Zusatzpumpe spezielle Zwischenwärmetauscher auf, die für die Entkopplung der unterschiedlichen Kühlmedien sorgen und aufgrund der Materialverträglichkeit mit deionisiertem Wasser in Edelstahl ausgeführt werden müssen. Der Motorölwärmetauscher, der Getriebeölwärmetauscher und der Heizungswärmetauscher können aus herkömmlichen Materialien hergestellt sein. Vorteilhafterweise können die speziellen Zwischenwärmetauscher aus Edelstahl beliebig im Motorraum angeordnet werden und mit unterschiedlichen vorzuwärmenden Medienströmen verknüpft werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Kühl- und Heizungskreislaufs eines Fahrzeugs mit einer Hilfsenergieversorgungseinrichtung und
- Fig. 2: eine Variante zu Fig.1.

### Beschreibung der Ausführungsbeispiele

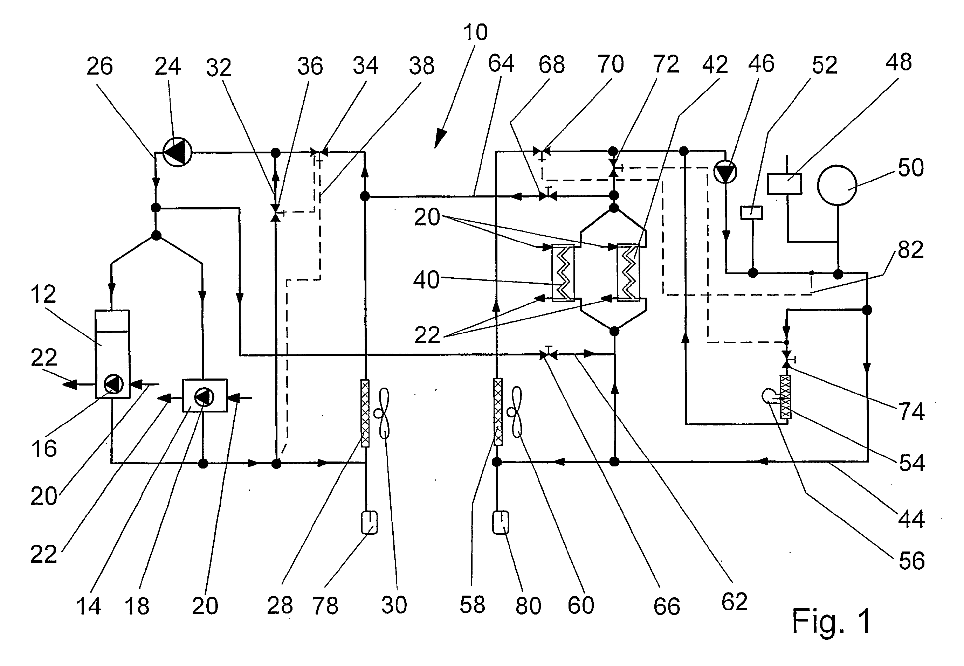

Eine Brennkraftmaschine 12 und ein Getriebe 14 eines Kraftfahrzeugs sind an einen ersten Teilkreislauf 26 eines Kühl- und Heizungskreislaufs 10 angeschlossen, in dem eine Kühlmittelpumpe 24 ein Kühlmittel fördert (Fig. 1). Die Pumpe 24 kann von einem regelbaren Elektromotor angetrieben werden oder mechanisch von der Brennkraftmaschine 12, wenn sie eine Einrichtung zum Einstellen der Fördermenge besitzt. Sie fördert das Kühlmittel von der Brennkraftmaschine 12 über einen ersten Kühlmittelweg 32, eine Bypassleitung, direkt zur Brennkraftmaschine 12 und dem Getriebe 14 zurück. Über die Bypassleitung 32 wird dem Kühlmittel nur sehr wenig Wärme entzogen, so dass die Brennkraftmaschine 12 und das Getriebe 14 schnell eine optimale Betriebstemperatur erreichen. Dadurch wird bei geringer Schadstoffemission weniger Kraftstoff verbraucht.

Parallel zur Bypassleitung 32 ist ein zweiter Kühlmittelweg zu einem Kühler 28 vorgesehen, der mit einem Lüfter 30 zusammenarbeitet und dem Kühlmittel überschüssige Wärme entzieht. Überdies ist im Bereich des Kühlers 28 ein Anschluss zu einem Ausgleichsbehälter 78 für das Kühlmittel angeordnet. Ein Thermostatventil 34 in der Bypassleitung 32 und ein Thermostatventil 36 im Kühlmittelzweig zum Kühler 28 regeln den Kühlmittelstrom zum Kühler 28 und/oder zur Bypassleitung 32. Dazu erhalten die Ventile 34 und 36, die auch zu einem Zwei/Dreiwegeventil vereinigt werden können, Vorgaben einer nicht dargestellten Klima- oder Motorsteuerung über eine Signalleitung 38.

Eine elektrisch angetriebene Motorölpumpe 16 und eine elektrisch angetriebene Getriebeölpumpe 18 fördern das Motoröl bzw. das Getriebeöl zu einem Motorölwärmetauscher 40 bzw. einem Getriebeölwärmetauscher 42. Sie können unabhängig von der Brennkraftmaschine 12 aus dem elektrischen Bordnetz des Kraftfahrzeugs betrieben. Die Öleinlässe der Pumpen 16, 18 und der Ölwärmetauscher 40, 42 sind mit 20 und die Auslässe mit 22 bezeichnet. Der Motorölwärmetauscher 40 und der Getriebeölwärmetauscher 42 sind einem zweiten Teilkreislauf 44 des Kühl- und Heizkreislaufs 10 zugeordnet, der vorrangig das Kühlen einer Brennstoffzelle 50 übernimmt. Im Falle einer Standklimatisierung speist die Brennstoffzelle 50 in Verbindung mit einem Schaltelement 48 das Bordnetz des Kraftfahrzeugs. Beim Betrieb der Brennstoffzelle 50 entsteht thermische Energie, welche über das Kühlmittel des zweiten Teilkreislaufs 44 auf kurzem Weg zum Motorölwärmetauscher 40 und zum Getriebeölwärmetauscher 42 transportiert wird. Die Wärmetauscher 40 und 42 übertragen die Energie dann auf das Motor- bzw. Getriebeöl, so dass diese Medien vor dem Start der Brennkraftmaschine 12 erwärmt werden können. Dadurch wird der Startvorgang erleichtert und die Aggregate schnell auf ihre optimale Betriebstemperatur gebracht.

Um vor dem Start der Brennkraftmaschine 12 gleichzeitig das Beheizen des Fahrzeuginnenraums zu ermöglichen, sind in einem weiteren Zweig des zweiten Teilkreislaufs 44 ein Heizungswärmetauscher 54 und ein Heizungsgebläse 56 angeordnet. Der Wärmeeintrag erfolgt auch hier über das Kühlmittel. Reicht die von der Brennstoffzelle 50 abgegebene Wärmemenge nicht aus, kann ein Zuheizer 52 temporär durch ein Schaltelement 48 zugeschaltet werden. Sollte andererseits der Wärmeeintrag in den Teilkreislauf 44 den Bedarf übersteigen, kann die überschüssige Wärme über einen Hilfskühler 58 mit einem Hilfslüfter 60 an die Umgebung abgegeben werden. Der zweite Teilkreislauf 44 kann somit im Standbybetrieb der Brennkraftmaschine 10 weit gehend autark arbeiten. Im Teilkreislauf 44 ist zudem ein Ausgleichsbehälter 80 vorgesehen, um temperaturbedingte Volumenänderungen des Kühlmittels auszugleichen. Das Kühlmittel wird im Teilkreislauf 44 unabhängig von der Brennkraftmaschine 12 mittels einer elektrisch angetriebenen Zusatzpumpe 46 gefördert, wobei die Ventile 70, 72 und 74 die Kühlmittelströme in den einzelnen Zweigen regeln. Die Regelung orientiert sich dabei immer an einem vorrangigen Bedarf, der über Vorgaben einer Klima- oder Motorsteuerung über eine Signalleitung 82 dem Heizungsventil 74 sowie den Thermostatventilen 70 und 72 übermittelt werden.

Eine Vorlaufleitung 62 mit einem Vorlaufventil 66 und eine Rücklaufleitung 64 mit einem Rücklaufventil 68 verbinden den ersten Teilkreislauf 26 mit dem zweiten Teilkreislauf 44. Über diese Verbindung kann im Bedarfsfall, beispielsweise im Fahrbetrieb des Kraftfahrzeugs, Kühlmittel des ersten Teilkreislaufs 26 zum Motorölwärmetauscher 40 und zum Getriebeölwärmetauscher 42 gelangen, um die notwendige Kühlleistung allein durch den Kühler 28 sicherzustellen oder die Brennstoffzelle 50 auf Betriebstemperatur zu halten oder im Standbybetrieb über das Kühlmittel die Brennkraftmaschine 12 und das Getriebe 14 durch die Brennstoffzelle 50 vorzuwärmen. Dabei wird der Kühlmittelvolumenstrom durch das Vorlaufventil 66 und das Rücklaufventil 68 bedarfsgerecht eingestellt.

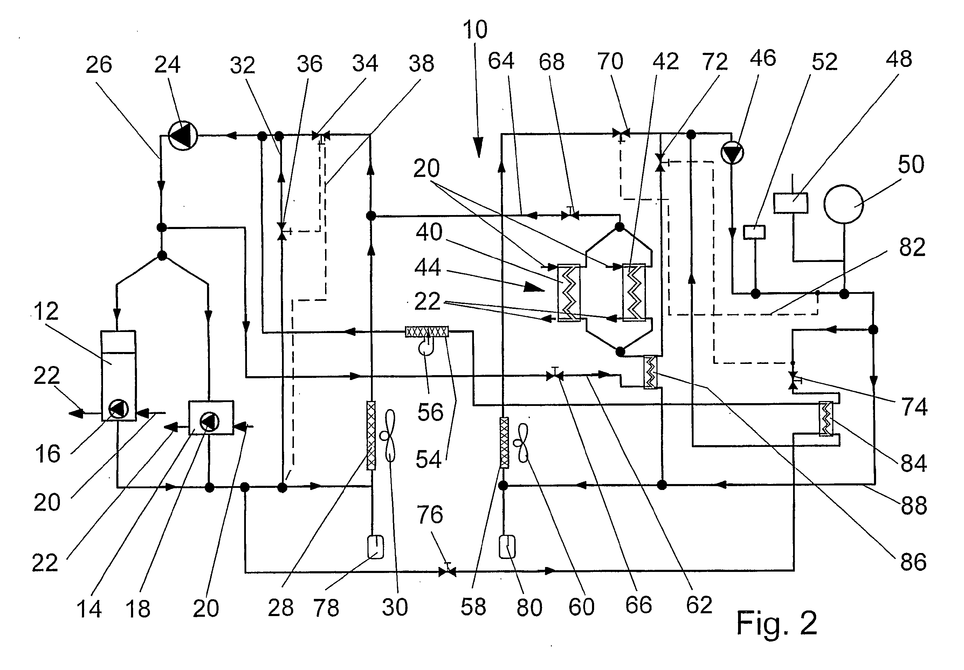

Beim Einsatz von deionisiertem Wasser, das wegen seiner Eigenschaft der Nichtleitfähigkeit derzeit bevorzugt als Kühlmittel bei Brennstoffzellen verwendet wird, ist das Kühlsystem 88 der Brennstoffzelle 50 im zweiten Teilkreislauf 44 als geschlossenes System ausgebildet. Es weist in dieser Ausführung neben der Brennstoffzelle 50 und der Zusatzpumpe 26 spezielle Zwischenwärmetauscher 84, 86 auf, die für die Entkopplung der unterschiedlichen Kühlmedien sorgen und aufgrund der Materialverträglichkeit mit deionisiertem Wasser in Edelstahl ausgeführt werden müssen (Fig. 2). Der Motorölwärmetauscher 40, der Getriebeölwärmetauscher 42 und der Heizungswärmetauscher 54 können aus herkömmlichen Materialien hergestellt sein. Vorteilhafterweise können die speziellen Zwischenwärmetauscher 84, 86 aus Edelstahl beliebig im Motorraum angeordnet werden und mit unterschiedlichen vorzuwärmenden Medienströmen verknüpft werden. Der Zwischenwännetauscher 86 ist mit dem Motorölwärmetauscher 40 und dem Getriebeölwärmetauscher 42 thermisch gekoppelt, um auch in dieser Ausgestaltung das Vorwärmen des Motor- bzw. Getriebeöls durch Nutzen der beim Kühlvorgang der Brennstoffzelle 50 entstehenden Abwärme zu ermöglichen. Das Beheizen des Fahrzeuginnenraums vor dem Start der Brennkraftmaschine 12 ist ebenfalls möglich, indem der Heizungswärmetauscher 54 mit dem Zwischenwärmetauscher 84 gekoppelt ist, wobei ein Regelventil 76 die Durchflussmenge regelt und somit den Wärmeeintrag bestimmt.

### Bezugszeichen

- 10: Kühl- und Heizkreislauf
- 12: Brennkraftmaschine
- 14: Getriebe
- 16: Motorölpumpe
- 18: Getriebeölpumpe
- 20: Öleinlass
- 22: Ölauslass
- 24: Kühlmittelpumpe
- 26: Teilkreislauf
- 28: Kühler
- 30: Lüfter
- 32: Bypassleitung
- 34: Thermostatventil
- 36: Thermostatventil
- 38: Signalleitung
- 40: Motorölwärmetauscher
- 42: Getriebeölwärmetauscher
- 44: Teilkreislauf
- 46: Zusatzpumpe
- 48: Schaltelement
- 50: Brennstoffzelle
- 52: Zuheizer
- 54: Heizungswärmetauscher
- 56: Heizungsgebläse
- 58: Hilfskühler
- 60: Hilfslüfter
- 62: Vorlaufleitung
- 64: Rücklaufleitung
- 66: Vorlaufventil
- 68: Rücklaufventil
- 70: Thermostatventil
- 72: Thermostatventil
- 74: Heizungsventil
- 76: Regelventil
- 78: Ausgleichsbehälter
- 80: Ausgleichsbehälter
- 82: Signalleitung
- 84: Zwischenwärmetauscher
- 86: Zwischenwärmetauscher
- 88: Kühlsystem

## Patentansprüche

1. Kraftfahrzeug mit einer Brennkraftmaschine (**12**) und Hilfsenergieversorgungseinrichtung, die eine Brennstoffzelle (**50**) umfasst, wobei Energieströme und/oder Stoffströme der Brennkraftmaschine (**12**) und der Brennstoffzelle (**50**) miteinander gekoppelt sind, indem ein Kühl- und Heizkreislauf (**10**) vorgesehen ist, wobei der Kühl- und Heizkreislauf (**10**) einen ersten Teilkreislauf (**26**) und einen zweiten Teilkreislauf (**44**) aufweist, von denen der erste (**26**) der Brennkraftmaschine (**12**) und der zweite (**44**) der Brennstoffzelle (**50**) zugeordnet ist, und wobei die beiden Teilkreisläufe (**26, 44**) durch eine Vorlaufleitung (**62**) mit einem Vorlaufventil (**66**) und durch eine Rücklaufleitung (**64**) mit einem Rücklaufventil (**68**) miteinander verbunden sind, **dadurch gekennzeichnet, dass** im zweiten Teilkreislauf (**44**) ein Motorölwärmetauscher (**40**) für die Brennkraftmaschine (**12**) und/oder ein Getriebeölwärmetauscher (**42**) angeordnet sind.

2. Kraftfahrzeug nach Anspruch 1, **dadurch gekennzeichnet, dass** eine elektrisch angetriebene Motorölpumpe (**16**) das Motoröl zu dem Motorölwärmetauscher (**40**) fördert.

3. Kraftfahrzeug nach Anspruch 1, **dadurch gekennzeichnet, dass** eine elektrisch angetriebene Getriebeölpumpe (**18**) Getriebeöl eines Getriebes (**14**) zu dem Getriebeölwärmetauscher (**42**) fördert.

4. Kraftfahrzeug nach Anspruch 3, **dadurch gekennzeichnet, dass** der Motorölwärmetauscher (**40**) und der Getriebeölwärmetauscher (**42**) parallel geschaltet sind.

5. Kraftfahrzeug nach einem der vorhergehenden Ansprüche, **dadurch gekennzeichnet, dass** der zweite Teilkreislauf (**44**) eine elektrisch angetriebene Zusatzpumpe (**46**) besitzt, die das Kühlmittel durch den zweiten Teilkreislauf (**44**) fördert.

6. Kraftfahrzeug nach Anspruch 5, **dadurch gekennzeichnet, dass** in dem zweiten Teilkreislauf (**44**) ein Heizungswärmetauscher (**54**) angeordnet ist, dessen Durchfluss durch ein elektrisch ansteuerbares Heizungsventil (**74**) regelbar ist.

7. Kraftfahrzeug nach einem der vorhergehenden Ansprüche, **dadurch gekennzeichnet, dass** an dem zweiten Teilkreislauf (**44**) ein Zuheizer (**52**) angeschlossen ist.

8. Kraftfahrzeug nach einem der vorhergehenden Ansprüche, **dadurch gekennzeichnet, dass** der zweite Teilkreislauf (**44**) ein geschlossenes Kühlsystem (**88**) umfasst, das mit einem deionisiertem Kühlmedium betrieben wird und an dem die Brennstoffzelle (**50**) und/oder der Zuheizer (**52**) angeschlossen sind und in dem die Zusatzpumpe (**46**) angeordnet ist, wobei das geschlossene Kühlsystem (**88**) über einen Zwischenwärmetauscher (**84**) mit dem Kühlmittelkreislauf des Motorölwärmetauschers (**40**) und/oder Getriebeölwärmetauschers (**42**) gekoppelt ist.

9. Kraftfahrzeug nach Anspruch 8, **dadurch gekennzeichnet, dass** der Heizungswärmetauscher (**54**) dem ersten Teilkreislauf (**26**) zugeordnet ist und sein Kühlmittelkreislauf über einen zweiten Zwischenwärmetauscher (b) mit dem geschlossenen Kühlsystem (**88**) des zweiten Teilkreislauf (**44**) gekoppelt ist.

## Claims

1. Motor vehicle having an internal combustion engine (12) and auxiliary power supply device which comprises a fuel cell (50), wherein power flows and/or material flows of the internal combustion engine (12) and of the fuel cell (50) are coupled to one another by virtue of the fact that a cooling and heating circuit (10) is provided, wherein the cooling and heating circuit (10) has a first component circuit (26) and a second component circuit (44), the first (26) of which is assigned to the internal combustion engine (12) and the second (44) of which is assigned to the fuel cell (50), and wherein the two component circuits (26, 44) are connected to one another by a forward feed line (62) with a forward feed valve (66) and by a return line (64) with a return valve (68), **characterized in that** an engine oil heat exchanger (40) for the internal combustion engine (12) and/or a gear oil heat exchanger (42) are arranged in the second component circuit (44).

2. Motor vehicle according to Claim 1, **characterized in that** an electrically driven engine oil pump (16) feeds the engine oil to the engine oil heat exchanger (40).

3. Motor vehicle according to Claim 1, **characterized in that** an electrically driven gearbox oil pump (18) feeds gear oil of a gearbox (14) to a gear oil heat exchanger (42).

4. Motor vehicle according to Claim 3, **characterized in that** the engine oil heat exchanger (40) and the gear oil heat exchanger (42) are connected in parallel.

5. Motor vehicle according to one of the preceding claims, **characterized in that** the second component circuit (44) has an electrically driven additional pump (46) which feeds the coolant through the second component circuit (44).

6. Motor vehicle according to Claim 5, **characterized in that** a heating heat exchanger (54) is arranged in the second component circuit (44) and the flow through it can be regulated by an electrically actuable heating valve (74).

7. Motor vehicle according to one of the preceding claims, **characterized in that** an additional heater (52) is connected to the second component circuit (44).

8. Motor vehicle according to one of the preceding claims, **characterized in that** the second component circuit (44) comprises a closed cooling system (88) which is operated with a de-ionized coolant and to which the fuel cell (50) and/or the additional heater (52) are connected and in which the additional pump (46) is arranged, wherein the closed cooling system (88) is coupled via an intermediate heat exchanger (84) to the coolant circuit of the engine oil heat exchanger (40) and/or gear oil heat exchanger (42).

9. Motor vehicle according to Claim 8, **characterized in that** the heating heat exchanger (54) is assigned to the first component circuit (26) and its coolant circuit is coupled via a second intermediate heat exchanger (86) to the closed cooling system (88) of the second component circuit (44).

## Revendications

1. Véhicule automobile équipé d'un moteur à combustion interne (12) et d'une installation d'alimentation en énergie auxiliaire, comprenant une pile à combustible (50),
les flux d'énergie et/ou de matière du moteur à combustion interne (12) et de la pile à combustible (50) étant couplés par un circuit de refroidissement et de chauffage (10), selon lequel
le circuit de refroidissement et de chauffage (10) comprennent un premier circuit partiel (26) et un second circuit partiel (44),
le premier circuit (26) est associé au moteur à combustion interne (12) et le second circuit (44) est associé à la pile à combustible (50) et
les deux circuits partiels (26, 44) sont reliés par une conduite d'aller (62) à une vanne d'aller (66) et par une conduite de retour (64) à une vanne de retour (68),
**caractérisé en ce que**
le second circuit partiel (44) comporte un échangeur de chaleur d'huile de moteur (40) pour le moteur à combustion interne (12) et/ou un échangeur de chaleur d'huile de boîte de vitesses (42).

2. Véhicule automobile selon la revendication 1,
**caractérisé par**
une pompe électrique d'huile moteur (16) qui débite l'huile du moteur vers l'échangeur de chaleur d'huile de moteur (40).

3. Véhicule automobile selon la revendication 1,
**caractérisé par**
une pompe électrique d'huile de boîte de vitesses (18) qui débite l'huile de la boîte de vitesses (14) vers l'échangeur de chaleur d'huile de boîte de vitesses (42).

4. Véhicule automobile selon la revendication 3,
**caractérisé en ce que**
l'échangeur de chaleur d'huile de moteur (40) et l'échangeur de chaleur d'huile de boîte de vitesses (42) sont branchés en parallèle.

5. Véhicule automobile selon l'une des revendications précédentes,
**caractérisé en ce que**
le second circuit partiel (44) comporte une pompe électrique complémentaire (46) qui débite l'agent de refroidissement dans le second circuit partiel (44).

6. Véhicule automobile selon la revendication 5,
**caractérisé par**
un échangeur de chaleur de chauffage (54) installé dans le second circuit partiel (44) et dont le débit est réglé par une vanne de chauffage (74) à commande électrique.

7. Véhicule automobile selon l'une des revendications précédentes,
**caractérisé par**
un dispositif de chauffage supplémentaire (52) relié au second circuit partiel (44).

8. Véhicule automobile selon l'une des revendications précédentes,
**caractérisé en ce que**
le second circuit partiel (44) comprend un circuit de refroidissement fermé (88) fonctionnant avec un milieu de refroidissement désionisé et auquel sont raccordés la pile à combustible (50) et/ou le dispositif de chauffage supplémentaire (52) et qui comporte la pompe complémentaire (46),
le dispositif de refroidissement (88), fermé, étant couplé par un échangeur de chaleur intermédiaire (84) au circuit de fluide de refroidissement de l'échangeur de chaleur d'huile moteur (40) et/ou l'échangeur de chaleur d'huile de boite de vitesses (42).

9. Véhicule automobile selon la revendication 8,
**caractérisé en ce que**
l'échangeur de chaleur de chauffage (54) est associé au premier circuit partiel (26) et son circuit d'agent de refroidissement est couplé par un second échangeur intermédiaire (86) au circuit de refroidissement fermé (88) du second circuit partiel (44).
